# EUROPÄISCHE PATENTSCHRIFT

(11) **EP 2 354 585 B1**
(45) Veröffentlichungstag und Bekanntmachung des Hinweises auf die Patenterteilung: **21.11.2012**
(21) Anmeldenummer: 11152161.3
(22) Anmeldetag: 26.01.2011
(51) Int. Cl.: F16D 65/14, F16J 3/04

(54) **Scheibenbremse, insbesondere für ein Nutzfahrzeug**
Disc brake, in particular for a commercial vehicle
Frein à disque, en particulier pour un véhicule utilitaire

(30) Priorität: 28.01.2010 DE 102010006046
(43) Veröffentlichungstag der Anmeldung: 10.08.2011
(73) Patentinhaber: KNORR-BREMSE Systeme für Nutzfahrzeuge GmbH, 80809 München (DE)
(72) Erfinder: Asen, Alexander, 94474, Vilshofen (DE)
(74) Vertreter: Mattusch, Gundula

(56) Entgegenhaltungen:
- EP-A2- 2 199 639
- WO-A1-96/34216
- WO-A1-2008/025489
- US-A1- 2001 047 913

## Beschreibung

Die Erfindung betrifft eine Scheibenbremse insbesondere für ein Nutzfahrzeug, nach dem Oberbegriff des Anspruchs 1.

Um die in einem Aufnahmeraum des Bremssattels angeordneten funktionsrelevanten Bauteile, wie eine Zuspanneinrichtung, vor Korrosion durch Witterungseinflüsse zu schützen, ist dieser Aufnahmeraum weitgehend verschlossen, und zwar auf der dem bei einer Schiebesattelbremse zuspannseitigen Bremsbelag zugeordneten Seite mittels eines Verschlussdeckels.

Die Stellspindeln, die mittels der Zuspanneinrichtung gegen den Bremsbelag drückbar sind, sind durch den Verschlussdeckel geführt und hier jeweils durch einen Faltenbalg abgedichtet, der einerseits an der Stellspindel und andererseits an dem Verschlussdeckel befestigt ist.

Hierzu weist der Verschlussdeckel einen die Durchtrittsöffnung der Stellspindel umfänglich begrenzenden Kragen auf, an dessen Innenseite ein Endbereich des Faltenbalgs ausschließlich reibschlüssig anliegt.

Um diesen Reibschluss herstellen zu können, sind jedoch bestimmte Voraussetzungen zu erfüllen. Hierzu zählen insbesondere sehr enge Toleranzen, vor allem des lichten Durchmessers des Kragens sowie dessen Oberflächenbeschaffenheit, aber auch eine genau runde Außenkontur des Faltenbalges im Verbindungsbereich mit dem Verschlussdeckel. Nur so ist ein halbwegs sicherer Presssitz zu erreichen.

Da der Faltenbalg insgesamt aufgrund der Relativbewegung der Stellspindel, an der der Faltenbalg andererseits befestigt ist, bzw. eines mit der Stellspindel fest verbundenen Druckstücks, zum Verschlussdeckel aus einem elastischen, d.h. deformierbaren Material besteht, ist im Verbindungsbereich mit dem Verschlussdeckel in den anliegenden Endbereich des Faltenbalgs eine stabile, üblicherweise metallische Einlage eingearbeitet, bevorzugt durch Umspritzen, wenn der Faltenbalg insgesamt aus Kunststoff hergestellt ist.

In der WO 2008/025489 A1 ist eine Scheibenbremse geoffenbart, bei der der Stützring im Sinne eines Presssitzes reibschlüssig an der Wandung der Durchtrittsöffnung der Verschlussplatte anliegt. Dass an der Wandung anliegende elastische Material des Faltenbalges dient der Abdichtung. Eine vergleichbare Konstruktion, bei der allerdings nur ein Stützring des Faltenbalges als dessen Halterung an der Verschlussplatte dient, ist aus der WO 96/34216 A1 entnehmbar, ebenso wie aus der US 2001/0047913 A1.

Trotz des notwendigerweise betriebenen Aufwands hinsichtlich der genannten engen Durchmessertoleranzcn, der Oberflächenbeschaffenheit der Anlageseite des Kragens, sowie der genau runden Kontur des Faltenbalges, besteht die Gefahr, dass die reibschlüssige Verbindung des Faltenbalgs mit dem Verschlussdeckel durch die Relativbewegung der Stellspindel so weit gelöst wird, dass der Faltenbalg aus dem Kragen des Verschlussdeckels herauswandert, so dass eine dauerhaft angestrebte Dichtwirkung nicht gewährleistet ist.

Daneben sind aufgrund der erforderlichen engen Toleranzen entsprechend aufwendige Fertigungsmaßnahmen erforderlich, die zu relativ hohen Fertigungskosten insgesamt führen.

Der Erfindung liegt die Aufgabe zugrunde, eine Scheibenbremse der gattungsgemäßen Art so weiterzuentwickeln, dass ihre Betriebssicherheit verbessert, die Standzeit erhöht und die Fertigungskosten reduziert werden.

Diese Aufgabe wird durch eine Scheibenbremse mit den Merkmalen des Anspruchs 1 gelöst.

Durch diese konstruktive Ausbildung werden eine ganze Reihe von Vorteilen gegenüber dem Stand der Technik erreicht.

So ist zunächst der verbesserte Halt des Faltenbalgs im Verschlussdeckel zu nennen, der dazu führt, dass ein Verrutschen oder gar Lösen des Faltenbalges aus seinem Sitz mit dem Verschlussdeckel ausgeschlossen ist.

Naturgemäß erhöht dies die Betriebssicherheit ebenso wie die Standzeit der Scheibenbremse, da der Aufnahmeraum dauerhaft, also über die gesamte Betriebszeit der Scheibenbremse abgedichtet ist, so dass weder Schmutz noch Feuchtigkeit in den Aufnahmeraum dringen können, was die darin befindlichen Funktionsteile in Mitleidenschaft ziehen würde.

Die verbesserte Funktions- bzw. Betriebssicherheit führt letztendlich zu einer Betriebskostenoptimierung, zumindest aber zu einer Betriebskostenreduzierung.

Darüber hinaus ergeben sich durch die Erfindung verminderte Fertigungskosten, da weder für den Faltenbalg im Anbindungsbereich am Verschlussdeckel, noch an der zugeordneten Anlagefläche des Kragens besonders enge Toleranzen eingehalten werden müssen bzw. der Faltenbalg durchaus in gewissem Maße unrund sein kann.

Zur Kostenreduzierung trägt auch bei, dass die Erfindung sehr einfach zu realisieren ist. So kann der Faltenbalg unverändert bleiben, während, wie nach einer vorteilhaften Weiterbildung der Erfindung vorgesehen, in den Kragen Prägungen einbracht, vorzugsweise eingestanzt sein können, in Material des aus einem Elastomer bestehenden Faltenbalges derart eindringt, dass eine formschlüssige Sicherung in jeder Richtung erreicht wird.

Der Verschlussdeckel besteht üblicherweise aus einem Blech-Stanzteil, so dass das Einbringen der Prägungen ohne Mehraufwand beim Stanzen des Verschlussdeckels erfolgt.

Daneben bleibt dieser in seiner übrigen Konfiguration unverändert, so dass im Servicefall, wenn beispielsweise Bremsbeläge ausgetauscht werden müssen, auch der vorhandene gegen einen neuen Verschlussdeckel getauscht werden kann, ohne dass es dazu besonderer Montagearbeiten erfordert. So kann der Faltenbalg mit seinem dem Kragen zugeordneten Endbereich in die lichte Durchtrittsöffnung für die Stellspindel eingedrückt werden mit sofortiger Wirkung des Formschlusses.

Kostenvorteile ergeben sich im Übrigen auch daraus, dass eine Korrosionsbeschichtung des Verschlussdeckels, wie sie üblich ist, mit einem niedrigeren Reibungskoeffizienten Verwendung finden kann, die preiswerter ist als eine solche mit einem höheren Reibungskoeffizienten.

Durch den Formschluss im Sinne der Prägungen, von denen in gleichem Winkelabstand zueinander zumindest drei vorgesehen sind, vorzugsweise vier, und in die das Elastomer des Anlagebereiches des Faltenbalges nach dem Einpressen sozusagen einfließt, wird eine Beschädigung des Faltenbalges im Anlagebereich vermieden, so dass der Faltenbalg in jedem Fall seine Dichtfunktion uneingeschränkt erfüllen kann.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer Scheibenbremse in einer geschnittenen Draufsicht
- Figur 2: eine Einzelheit der Scheibenbremse in einer geschnittenen Seitenansicht
- Figur 3: einen Teilausschnitt der Verschlussplatte der Scheibenbremse in einer perspektivischen Ansicht.

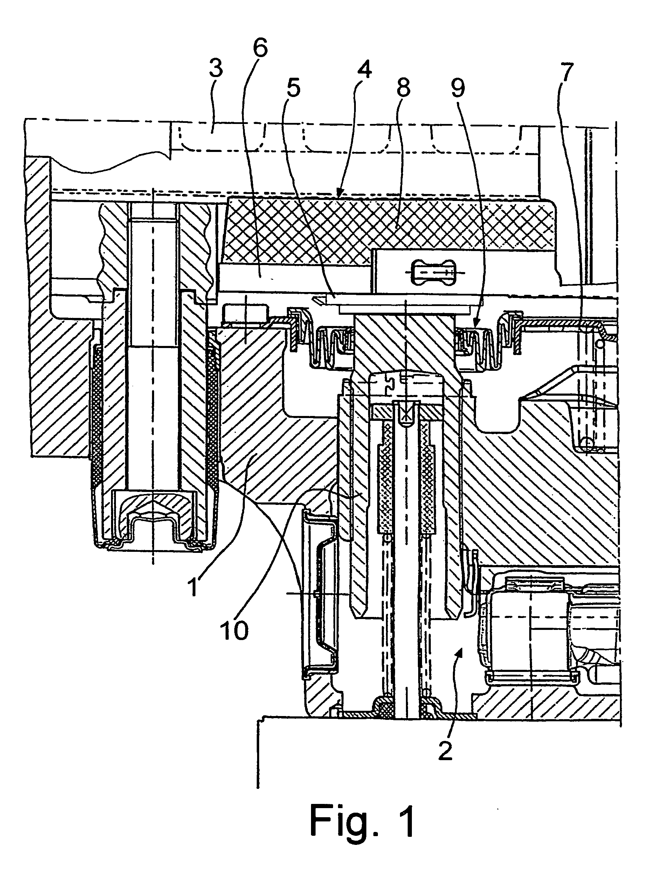

In der Figur 1 ist eine Hälfte einer Scheibenbremse dargestellt, die einen als Schiebesattel ausgebildeten Bremssattel 1 aufweist, der eine Bremsscheibe 3 in ihrem oberen Umfangsbereich umfasst. Dabei kann die Scheibenbremse pneumatisch oder elektromotorisch betätigbar sein.

Zu beiden Seiten der Bremsscheibe 3 sind Bremsbeläge 4 angeordnet, von denen hier ein aktionsseitiger dargestellt ist, der im Funktionsfall gegen die Bremsscheibe 3 pressbar ist.

Der Bremsbelag 4 besteht aus einer Trägerplatte 6, einem auf deren der Bremsscheibe 3 zugewandten Seite befestigten Reibbelag 8 sowie zwei fest mit der Trägerplatte 6 verbundenen Druckstücken 5, von denen eines in der Figur 1 erkennbar ist.

Über eine im Bremssattel 1 angeordnete, über einen Drehhebel betätigbare Zuspanneinrichtung 2 wird eine Stellspindel 10 gegen das Druckstück 5 und damit gegen den Bremsbelag 4 gedrückt. Anstelle des fest mit der Trägerplatte 6 verbundenen Druckstücks 5 kann das Druckstück auch an der Stirnseite der Stellspindel 10 angeordnet sein.

Zur Einstellung eines Lüftspiels zwischen dem Reibbelag 8 und der Bremsscheibe 3, unter Berücksichtigung des Verschleißes des Reibbelages 8, ist die als Gewindespindel ausgebildete Stellspindel 10 drehbar im Bremssattel gelagert und über eine nicht dargestellte Nachstelleinrichtung bewegbar.

Der Bremssattel 1 ist auf seiner der Bremsscheibe 3 zugewandten Seite weitgehend durch einen Verschlussdeckel 7 verschlossen, der im Austrittsbereich der Stellspindel 10 durchbrochen ist.

Zur Abdichtung des Austrittsbereichs der Stellspindel 10 aus dem Bremssattel 1 ist ein mit dem Verschlussdeckel 7 verbundener Faltenbalg 9 vorgesehen, der anderseits an der Stellspindel 10 befestigt ist.

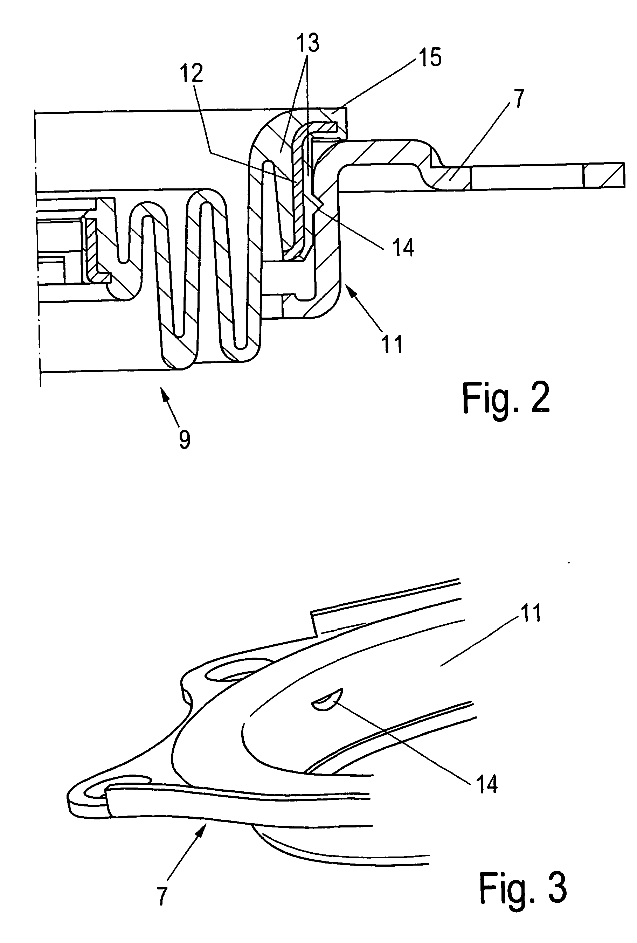

Erfindungsgemäß ist der Faltenbalg 9 reib- und formschlüssig am Verschlussdeckel 7 angeschlossen, wozu, wie in den Figuren 2 und 3 zu erkennen ist, der Verschlussdeckel 7 Formschlussmittel in Form von Prägungen 14 aufweist.

Diese Prägungen 14 sind in einen den Austrittsbereich der Stellspindel 10, auf deren Darstellung in der Figur 2 verzichtet ist, begrenzenden umlaufenden Kragen 11 eingestanzt und erstrecken sich so weit nach außen, dass sie eine Mulde bilden, in die einen Stabilisierungsring 12 des Faltenbalges 9 umhüllendes Material eindringen kann, wobei dieses Material aus einem Kunststoff, bevorzugt aus einem Elastomer besteht, das die erforderlichen Fließeigenschaften zum Eindringen in die Prägungen 14 besitzt.

Der Außendurchmesser des Faltenbalges 9 im Anlagebereich an der Innenfläche des Kragens 11 weist gegenüber dessen lichtem Durchmesser ein gewisses Übermaß auf, so dass der Faltenbalg 9 in den Verschlussdeckel 7 eingepresst werden muss, wodurch sich ein Reibschluss herausbildet. Dabei sind jedoch keine besonders engen Toleranzen einzuhalten, da durch den gebildeten Formschluss ein sicherer Halt des Faltenbalges 9 im Verschlussdeckel 7 gewährleistet ist.

Im Übrigen ist der Faltenbalg 9 mit einem abgewinkelten Rand 15 versehen, der beim Einschieben in den Austrittsbereich des Verschlussdeckels 7 durch Anlage an diesen einen Anschlag bildet.

Bevorzugt sind die Prägungen 14 über den Umfang des Kragens 11 verteilt in gleichen Winkelabständen angeordnet.

Wie deutlich in den Figuren 2 und 3 zu erkennen ist, ist jede Prägung 14 zumindest entgegen der Einschubrichtung des Faltenbalges 9 scharfkantig ausgebildet. Denkbar ist auch, die Prägungen 14 in diesem Bereich im Sinne einer Hinterschneidung zu gestalten, so dass das Material 13 die Prägungen 14 krallenartig hintergreift.

## Patentansprüche

1. Scheibenbremse, mit einem Bremssattel (1), in dem zwei in Funktion gegen eine Bremsscheibe (3) pressbare Bremsbeläge (4) angeordnet sind, von denen ein aktionsseitiger über mindestens eine Stellspindel (10) mittels einer Zuspanneinrichtung betätigbar ist, wobei die Stellspindel (10) durch einen einen Aufnahmeraum (2) des Bremssattels (1) zur Bremsscheibe (3) hin verschlie-βenden Verschlussdeckel (7) geführt ist, an dem zur Abdichtung ein andererseits an der Stellspindel (10) befestigter Faltenbalg (9) aus einem elastischen Material (13) angeschlossen ist, **dadurch gekennzeichnet, dass** der Faltenbalg (9) mit seinem elastischen Material (13) form- und reibschlüssig am Verschlussdeckel (7) befestigt ist.

2. Scheibenbremse nach Anspruch 1, **dadurch gekennzeichnet, dass** der Verschlussdeckel (7) im Durchtrittsbereich der Stellspindel (10) einen abgewinkelten Kragen (11) aufweist, in den Formschlussmittel eingebracht sind, in die der Faltenbalg (9) eingreift.

3. Scheibenbremse nach Anspruch 2, **dadurch gekennzeichnet, dass** die Formschlussmittel eingestanzt sind.

4. Scheibenbremse nach einem der Ansprüche 2 oder 3, **dadurch gekennzeichnet, dass** die Formschlussmittel aus Prägungen (14) bestehen.

5. Scheibenbremse nach Anspruch 4, **dadurch gekennzeichnet, dass** die Prägungen (14) entgegen der Einschieberichtung des Faltenbalges (9) scharfkantig ausgebildet sind.

6. Scheibenbremse nach einem der Ansprüche 4 oder 5, **dadurch gekennzeichnet, dass** die Prägungen (14) über den Umfang des Kragens (11) verteilt angeordnet sind.

7. Scheibenbremse nach einem der Ansprüche 4 bis 6, **dadurch gekennzeichnet, dass** die Prägungen (14) in gleichen Winkelabständen zueinander angeordnet sind.

8. Scheibenbremse nach einem der Ansprüche 4 bis 7, **dadurch gekennzeichnet, dass** mindestens drei, vorzugsweise vier Prägungen (14) vorgesehen sind.

## Claims

1. Disc brake comprising a brake calliper (1), wherein two brake linings (4) are arranged that are adapted to be pressed against a brake disc (3) in service, whereof one, on the action side, is adapted to be controlled via at least one adjusting spindle (10) by means of a brake application device, with said adjusting spindle being passed through a cover (7) closing a receiving space (2) in said brake calliper (3) towards said brake disc (3), to which cover joins a bellows element (9) made of a resilient material (13) that is fastened, on the other side, on said adjusting spindle (10) so as to ensure tightness, **characterised in that** said bellows element (9) with its resilient material (13) is fastened on said closing cover (7) in a form-fitting manner by friction contact.

2. Disc brake according to Claim 1, **characterised in that** said closing cover (7) presents a bent collar (11) in the region where said adjusting spindle (10) passes through, into which collar form-fitting means are inserted into which said bellows element (9) is engaged.

3. Disc brake according to Claim 2, **characterised in that** said form-fitting means are formed by stamping.

4. Disc brake according to any of the Claims 2 or 3, **characterised in that** said form-fitting means are constituted by embossed sections (14).

5. Disc brake according to Claim 4, **characterised in that** said embossed sections (14) present a configuration with sharp edges in opposition to the direction of insertion of said bellows element (9).

6. Disc brake according to any of the Claims 4 or 5, **characterised in that** said embossed sections (14) are distributed along the periphery of said collar (11).

7. Disc brake according to any of the Claims 4 to 6, **characterised in that** said embossed sections (14) are disposed at equal angular distances from each other.

8. Disc brake according to any of the Claims 4 to 7, **characterised in that** at least three, preferably four, embossed sections (14) are provided.

## Revendications

1. Frein à disque comprenant un étrier de frein (1), dans lequel deux garnitures de frein (4) sont disposées, qui sont aptes à être pressé contre un de frein (3) en marche, dont une, du côté d'action, est apte à être commandé via au moins une broche de réglage (10) moyennant d'un dispositif de serrage de frein, à ladite broche de réglage étant passée à travers un couvercle (7) fermant un espace de réception (2) dans ledit étrier de frein (3) vers ledit disque de frein (3), auquel couvercle se joigne un soufflet (9) fait en un matériau élastique (13), qui est fixé, d'autre côté, à ladite broche de réglage (10) de façon à assurer l'étanchéité, **caractérisé en ce que** ledit soufflet (9) avec son matériau élastique (13) est fixé audit couvercle de fermeture (7) de façon positive et par friction.

2. Frein à disque selon la revendication 1, **caractérisé en ce que** ledit couvercle de fermeture (7) présente une collerette coudée (11) dans la zone, où ladite broche de réglage (10) passe à travers, dans laquelle collerette sont insérés des moyens d'adhérence de forme, dans lesquels ledit soufflet (9) est mis en prise.

3. Frein à disque selon la revendication 2, **caractérisé en ce que** lesdits moyens d'adhérence de forme sont formés par découpage.

4. Frein à disque selon une quelconque des revendications 2 ou 3, **caractérisé en ce que** lesdits moyens d'adhérence de forme sont constitués par des parties estampées (14).

5. Frein à disque selon la revendication 4, **caractérisé en ce que** lesdites parties estampées (14) présentent une configuration aux arêtes vives en opposition au sens d'insertion dudit soufflet (9).

6. Frein à disque selon une quelconque des revendications 4 ou 5, **caractérisé en ce que** lesdites parties estampées (14) sont distribuées le long de la périphérie de ladite collerette (11).

7. Frein à disque selon une quelconque des revendications 4 à 6, **caractérisé en ce que** lesdites parties estampées (14) sont disposées aux écarts angulaires égaux l'une de l'autre.

8. Frein à disque selon une quelconque des revendications 4 à 7, **caractérisé en ce qu'**au moins trois, de préférence quatre, parties estampées (14) sont formées.
